# FASCICULE DE BREVET EUROPEEN

(11) **EP 0 650 509 B1**
(45) Date de publication et mention de la délivrance du brevet: **18.09.1996**
(21) Numéro de dépôt: 93912489.7
(22) Date de dépôt: 08.07.1993
(51) Int. Cl.: C09C 1/00, C01G 31/00

(54) **PROCEDE DE PREPARATION DE PIGMENTS A BASE DE VANADATE DE BISMUTH TRES COLORANTS ET PURS**
VERFAHREN ZUR HERSTELLUNG VON SEHR FÄRBENDEN UND SAUBEREN WISMUTVANADATPIGMENTEN
METHOD FOR PREPARING HIGHLY-COLORIFIC HIGH-PURITY BISMUTH VANADATE BASED PIGMENTS

(30) Priorité: 14.07.1992 BE 9200653
(43) Date de publication de la demande: 03.05.1995
(73) Titulaire: COLOUR RESEARCH COMPANY (CORECO) LTD., Dublin 2 (IE)
(72) Inventeur: VERMOORTELE, Frank, F-59700 Marcq-en-Breuil (FR); BUYSE, Emile, Joseph, B-7700 Mouscron (BE)
(74) Mandataire: Van Malderen, Michel
(86) Numéro de dépôt international: BE9300047
(87) Numéro de publication internationale: WO9401497

(56) Documents cités:
- FR-A- 2 355 779

## Description

### Objet de l'invention

La présente invention concerne un procédé pour l'obtention de pigments à base de vanadate de bismuth présentant une pureté de teinte et une force colorante améliorées. L'invention concerne également les produits obtenus par ce procédé et leur application pour la coloration des peintures, des laques et/ou des matières plastiques.

### Etat de la technique et arrière-plan technologique à la base de l'invention

Les vanadates de bismuth purs ou modifiés sont des composés chimiques bien connus. Ils peuvent être utilisés entre autres comme catalyseur pour l'obtention d'oléfines, comme indicateur réversible de température ou comme pigment jaune non toxique pour la coloration des peintures aussi bien que des matières plastiques (demandes de brevet GB 237 688 - US 3843554 - JP 6361080 - DE 2727863).

Divers procédés permettent de fabriquer des pigments à base de vanadate de bismuth. On peut ainsi calciner des mélanges d'oxydes, ou de tout sel se décomposant thermiquement en oxyde, par exemple nitrate, carbonate, hydroxyde, phosphate, ... (brevets US 4026722 - US 4251283).Les températures de calcination peuvent varier dans une large gamme de valeur (200° à plus de 1000°c). Les produits calcinés peuvent être purifiés par broyage en milieu alcalin (brevet EP 304399).

On peut également mélanger des solutions contenant des sels de bismuth, vanadium, etc... et calciner les produits ainsi obtenus (demandes de brevet BE 9001230 - DE 3135281). Si l'on part du bismuth métallique finement divisé, la présence de fondant peut être avantageuse (demande de brevet DE 3315850).

On peut également réaliser la précipitation d'un gel de vanadate de bismuth que l'on sépare du milieu réactionnel, que l'on lave pour éliminer les nitrates et que l'on fait ensuite vieillir sans passer par une étape de calcination proprement dite (demandes de brevet US 4752460 - EP 430888 - US 4063956).

Ces procédés permettent d'obtenir des pigments à base de vanadate de bismuth de teinte jaune assez pure et dont les solidités à la lumière et à la chaleur peuvent être améliorées par divers traitements d'enrobage et de stabilisation. Toutefois, la pureté et la vivacité de teinte, la force colorante et le pouvoir opacifiant de ces pigments restent limités et en restreignent l'emploi.

Le brevet FR-2355779 décrit un procédé de préparation d'un vanadate de bismuth dans lequel on mélange une solution de nitrate de bismuth dans de l'acide nitrique avec une solution de vanadate de métal alcalin (de préférence un vanadate de sodium ou de potassium) dans une base aqueuse choisie parmi l'hydroxyde de sodium et l'hydroxyde de potassium, pour précipiter un gel de vanadate de bismuth en suspension dans une solution contenant un nitrate de métal alcalin dissous; les normalités des solutions acide et basique étant réglées avant l'opération de mélange de manière que le pH du mélange soit compris entre 1,0 et 11,0 environ.

La solution de vanadate de métal alcalin est préparée en dissolvant un composé de vanadium pentavalent comme V₂O₅, Na₃VO₄, Na₄V₂O₇, NaVO₃ ou K₃VO₄ dans une base aqueuse choisie parmi l'hydroxyde de sodium et l'hydroxyde de potassium.

Cependant, ce sel présente l'inconvénient d'être peu soluble et de donner des eaux mères colorées de sels solubles à base de vanadium pentavalent.

En outre, la dissolution de pentoxyde de vanadium dans la soude caustique pour obtenir une solution basique de vanadate de sodium n'est pas une opération très facile, car il faut agiter très longtemps à température plus élevée que la normale et de préférence avec de l'eau pure ou distillée.

Dans ce procédé, le mélange de solution de bismuth et de vanadate s'effectue par "combinaison incrémentale" qui consiste en l'addition simultanée des réactifs sous pression dans un té de mélange.

Cette technique empêche les gradients relativement importants et le déséquilibre stoechiométrique qui se produisent quand des grandes quantités de corps en réaction sont mélangées en une seule fois. Ce déséquilibre entraîne les réactions secondaires indésirables. Des appareils qui fournissent commodément ce résultat sont des mélangeurs en T ou des réacteurs à écoulement.

Cependant, cette technique de mélange ne permet pas d'obtenir des pigments de teinte suffisamment vive et de force colorante suffisante.

### Eléments caractéristiques de l'invention

L'invention concerne un procédé de préparation d'un pigment à base de vanadate de bismuth, de préférence de teinte jaune très vive et pure, très opaque et dont la force colorante est augmentée de 50 %. La formule chimique générale de tels pigments est de préférence la suivante :

Biₐ L_{b}M_{c}N_{d}O₄

dans laquelle :
L est Si ou simultanément Si et un ou plusieurs éléments choisis parmi Ti, Ge ou Zr, ou encore simultanément Si ou un ou plusieurs éléments choisis parmi Ti, Ge ou Zr et un ou plusieurs éléments du groupe IIIa.
M est V, ou simultanément V et/ou plusieurs éléments choisis parmi le groupe V.
N est Mo ou W.
a varie de 1 à 4/3.
b et d variant de 0 à 1 max.
c étant supérieur à zéro et inférieur ou égal à 1.

Selon l'invention on procède aux étapes opératoires suivantes :
1) on fait réagir une solution acide de nitrate de bismuth avec une solution basique de métavanadate d'ammonium et éventuellement d'autres sels pour former un précipité à base de vanadate de bismuth dans un milieu réactionnel très acide à un pH de l'ordre de 1-2.
   De préférence, ce mélange s'effectue par addition d'une solution dans une autre, c'est-à-dire dans un gradient élevé de concentration, ce qui permet d'avoir une réaction complète et évite de rejeter les sels solubles. En effet, contrairement au procédé de l'état de la technique, on ne sépare pas le gel de la suspension et on ne rejette pas de solutions colorées par des sels solubles de vanadium lors de la filtration et du lavage.
2) on amène le pH du milieu réactionnel à une valeur de l'ordre de 7, de préférence directement à une valeur fixe de 7, par addition d'une base (par exemple de la soude caustique, de la potasse caustique, de l'ammoniaque,...).
3) on porte la température à une valeur de plus de 80°c en une durée de l'ordre de 30 minutes tout en maintenant le pH à une valeur de 7 avec une base.
4) on agite pendant 1/2 à plus de 2 heures jusqu'à un pH de l'ordre de 6,5.
5) on filtre, on lave soigneusement à l'eau et on sèche le pigment de préférence à une température supérieure à 300°c (par exemple dans un atomiseur).
   Avantageusement on enrobe le pigment pour améliorer encore ses résistances à la lumière, aux intempéries et à la chaleur, grâce à des enrobages et traitements de surfaces minéraux et/ou organiques.

L'invention concerne également le pigment obtenu par ce procédé et son utilisation pour la coloration des peintures, des laques et/ou des matières plastiques.

L'invention sera décrite de manière plus détaillée dans les exemples comparatifs suivants donnés uniquement à titre d'illustration de l'invention.

### Exemple 1

Dans un réacteur d'un litre, on coule 18g de nitrate de bismuth [solution acide contenant 22,6 % de Bi [(NO₃)₃]. On règle le volume à 100 ml par addition d'eau et l'on ajoute en 45 minutes une solution basique contenant 5,3 g de métavanadate d'ammonium, dont le volume a été porté à 250 ml par addition d'eau. On élève ensuite le pH à 7 par addition d'une solution de soude caustique. Ensuite on porte la température à 80°c en 30 minutes. On agite 1/2 heure tout en maintenant la température et le pH (t = 80°c, pH = 7).

Lorsque le pH commence à s'élever un peu (pH = 7,1) on agite encore environ 30 minutes. Finalement, après filtration, lavage, séchage et broyage, on obtient une poudre pigmentaire d'un jaune très vif et d'une très grande force colorante.

### Exemple 2

Suivant la méthode décrite à l'exemple 1, on effectue des préparations avec les variantes suivantes :
a) le pH est réglé à 6,5 au lieu de 7.
b) le pH est réglé à 7,5 au lieu de 7.
c) on règle la température à 95°c au lieu de 80°c.
d) juste après la précipitation, on règle le pH à 4,5, on filtre le précipité, on le lave et on le remet en suspension dans 500 ml d'eau puis on règle le pH à 7 et l'on continue comme dans l'exemple 1.
e) on règle la température à 70°c au lieu de 80°c.

Les pigments obtenus selon les exemples a), b), d) et e) sont inférieurs au pigment de l'exemple 1 : teinte plus sale et moins vive, force colorante inférieure, solidité à la lumière moindre, par contre le pigment de l'exemple 2c) est similaire au pigment de l'exemple 1.

Ceci montre :
1° qu'un pH supérieur ou inférieur à 7 donne de mauvais résultats.
2° que laver le précipité avant le mûrissement donne de mauvais résultats.
3° que la température de mûrissement doit être supérieure ou égale à 80°c.

### Exemple 3

Dans un réacteur de 2 l, on coule 40,41 g de nitrate de bismuth. On règle le volume à 250 ml et l'on ajoute en 45 minutes une solution basique contenant 10,88 g de métavanadate d'ammonium et 1,7 g de silicate de soude (solution à 25,2 % SiO₂) dont le volume a été porté à 450 ml par addition d'eau. Ensuite, les autres étapes du procédé s'effectuent comme dans l'exemple 1. On obtient finalement une poudre pigmentaire jaune clair de silicovanadate de bismuth répondant à la formule Bi_{1,024} Si_{0,071} V_{0,929} O₄ dont la teinte et la force colorante sont comparables à celles du pigment de l'exemple 1.

### Exemple 4

Suivant la méthode décrite à l'exemple 1, on prépare un pigment de vanadate de bismuth où 5,3 g de métavanadate d'ammonium sont remplacés par 5,54 g de métavanadate de sodium. Le pigment ainsi obtenu est inférieur en pureté de teinte au pigment de l'exemple 1. Ceci montre que le cation NH₄, associé à l'anion métavanadate, est préférable aux cations des métaux alcalins.

### Exemple 5

Suivant la méthode décrite à l'exemple 1, on prépare un molybdovanadate de bismuth. On prend 21,3 g de nitrate de bismuth. On règle le volume à 100 ml et l'on ajoute en 45 minutes une solution basique contenant 2,675 g de molybdate de sodium et 2,850 g de métavanadate d'ammonium et dont le volume a été porté à 270 ml. Ensuite on règle le pH à 7 par addition de soude caustique diluée et l'on porte la température à 80°c. Malgré plusieurs heures d'agitation, le mûrissement cristallin ne se produit pas. Si toutefois on veut obtenir un molybdovanadate, il faut, juste après la précipitation, régler le pH à 4,5 par addition de soude caustique, agiter 1 heure, filtrer, laver, sécher et calciner 1 heure à 600°c. Le pigment jaune clair ainsi obtenu est cependant au moins 50 % moins colorant que le pigment de l'exemple 1.

### Exemple 6

Suivant la méthode à l'exemple 1, on prépare un pigment de vanadate de bismuth où des ions étrangers sont ajoutés soit à la solution de vanadate d'ammonium, soit durant l'agitation de mûrissement. Nous avons utilisé :
a) 2,5 g de fluorure de potassium;
b) 2,5 g de chlorure de sodium;
c) 0,25 g de nitrate de fer,
les pigments obtenus ainsi ont une teinte terne et sont peu colorants.

### Exemple 7

Un pigment (essai 1031) est réalisé suivant l'exemple 4E du brevet FR-2355779. De plus, il est stabilisé en se basant sur l'exemple 2 de ce brevet, afin de pouvoir comparer la solidité à la lumière et aux intempéries.

Un autre pigment (essai 1035) est réalisé suivant l'exemple 1 susmentionné. Il a été stabilisé de la même façon que l'essai 1031 c'est-à-dire avec du pyrophosphate d'aluminium.

Dans des peintures faites avec les deux pigments, on voit que l'essai 1031 est nettement plus foncé, plus jaune et plus sale que l'essai 1035 et cela autant en ton plein qu'en ton dégradé au blanc de titane 1:1 dE* : 11,60 (1035 - 1031)
- dL* : - 5,03 (plus foncé)
- dC* : -10,11 (plus sale)
- dH* : - 2,66 (plus jaune)

Encore pour un autre pigment (essai 1032), on remplace dans le procédé décrit par le brevet FR-2345779 (essai 1031) le vanadate de sodium (V₂O₅ + NaOH) par une quantité équivalente de métavanadate d'ammonium. Si l'on compare maintenant cet essai 1032 à l'essai 1031, on remarque l'influence de l'ion NH4 : plus clair, plus pur, plus vert
dE* : 4,58 (1031 - 1032)
- dL* : 1,84 (plus clair)
- dC* : 4,13 (plus pur)
- dH* : 0,71 (plus vert)

Toutefois, selon ce procédé, même avec du métavanadate d'ammonium, on obtient un pigment inférieur à ce qu'on peut obtenir avec le procédé selon l'invention : le pigment reste plus foncé, plus sale, plus jaune qu'avec le procédé selon l'invention
dE* : 6,49 (1035 - 1032)
- dL* : - 2,99 (plus foncé)
- dC* : - 5,60 (plus sale)
- dH* : - 1,77 (plus jaune)

## Revendications

1. Procédé de préparation d'un pigment à base de vanadate de bismuth caractérisé en ce que :
1) on fait réagir une solution acide de nitrate de bismuth avec une solution basique de métavanadate d'ammonium et éventuellement d'autres sels pour former un précipité à base de vanadate de bismuth dans un milieu réactionnel très acide à un pH de l'ordre de 1-2.
2) on amène le pH du milieu réactionnel à une valeur de l'ordre de 7 par addition d'une base.
3) on porte la température à une valeur de plus de 80°c en une durée de l'ordre de 30 minutes tout en maintenant le pH à une valeur de 7 avec une base.
4) on agite pendant 1/2 heure à plus de 2 heures jusqu'à un pH de l'ordre de 6,5.
5) on filtre, lave et sèche le pigment.

2. Procédé selon la renvendication 1 caractérisé en ce qu'on fait réagir une solution de nitrate de bismuth avec une solution de basique de métavanadate d'ammonium par addition d'une solution dans une autre.

3. Procédé selon la revendication 1 ou 2 caractérisé en ce que l'on amène le pH du milieu réactionnel de l'étape (1) directement à une valeur fixe de 7 par addition d'une base.

4. Procédé selon l'une quelconque des revendications 1 à 3 caractérisé en ce qu'on sèche le pigment à une température supérieure ou égale à 300°c.

5. Procédé selon l'une quelconque des revendications précédentes caractérisé en que le pigment obtenu est enrobé et/ou traité par l'addition de composés minéraux et/ou organiques.

6. Pigment à base de vanadate de bismuth obtenu par le procédé selon l'une quelconque des revendications précédentes.

7. Utilisation du pigment à base de vanadate de bismuth selon la revendication 6 pour la coloration des peintures, des laques et/ou des matières plastiques.

## Patentansprüche

1. Verfahren zur Herstellung eines Pigments auf Wismutvanadatbasis, dadurch gekennzeichnet, daß:
1) man eine saure Wismutnitratlösung mit einer basischen Ammoniummetavanadatlösung und eventuell weiteren Salzen reagieren läßt, um in einem sehr sauren Reaktionsmilieu mit einem pH von ungefähr 1-2 einen Niederschlag auf Wismutvanadatbasis zu bilden.
2) man den pH des Reaktionsmilieus durch Zugabe einer Base auf einen Wert von ungefähr 7 bringt.
3) man die Temperatur innerhalb von ungefähr 30 Minuten auf einen Wert von über 80°C bringt, wobei der pH mit einer Base auf einem Wert von 7 gehalten wird.
4) man während 1/2 Stunde bis über 2 Stunden rührt, bis ein pH von ungefähr 6,5 erhalten wird.
5) man das Pigment filtriert, wäscht und trocknet.

2. Verfahren gemäß Anspruch 1, dadurch gekennzeichnet, daß man durch Zugabe einer Lösung zu der anderen eine Wismutnitratlösung mit einer basischen Ammoniummetavanadatlösung reagieren läßt.

3. Verfahren gemäß Anspruch 1 oder 2, dadurch gekennzeichnet, daß man den pH des Reaktionsmilieus von dem Schritt (1) durch Zugabe einer Base unmittelbar auf einen festen Wert von 7 bringt.

4. Verfahren gemäß irgendeinem der Ansprüche 1 bis 3, dadurch gekennzeichnet, daß man das Pigment bei einer Temperatur von 300°C oder darüber trocknet.

5. Verfahren gemäß irgendeinem der vorhergehenden Ansprüche, dadurch gekennzeichnet, daß das erhaltene Pigment durch Zugabe von mineralischen und/oder organischen Verbindungen umhüllt und/oder behandelt wird.

6. Pigment auf Wismutvanadatbasis, erhalten nach dem Verfahren gemäß irgendeinem der vorhergehenden Ansprüche.

7. Verwendung des gemäß Anspruch 6 erhaltenen Pigments auf Wismutvanadatbasis zur Färbung von Farben, Lacken und/oder Kunststoffen.

## Claims

1. Process of producing a pigment based on bismuth vanadate characterized in that :
1) an acid bismuth nitrate solution is reacted with a basic ammonium metavanadate solution and optionally other salts so as to form a precipitate based on bismuth vanadate in a very acid reaction medium at pH of about 1-2,
2) pH of the reaction medium is brought to a value of about 7 with addition of a base,
3) temperature is brought to a value of more than 80°C within a period of about 30 minutes while maintaining pH at a value of 7 with a base,
4) a stirring step is carried out for 1/2 hour to more than 2 hours up to a pH of about 6.5, and
5) pigment is filtered, washed and dried.

2. Process according to claim 1, characterized in that a bismuth nitrate solution is reacted with a basic ammonium metavanadate solution by adding one solution to the other.

3. Process according to claim 1 or 2, characterized in that pH of the reaction medium of step (1) is directly brought to a fixed value of 7 by adding a base.

4. Process according to any of preceding claims, characterized in that the resulting pigment is dried at a temperature higher or equal to 300°C.

5. Process according to any of preceding claims, characterized in that the resulting pigment is coated and/or treated by adding inorganic and/or organic compounds.

6. Pigment based on bismuth vanadate obtained by the process according to any of preceding claims.

7. Use of the pigment based on bismuth vanadate according to claim 6 for colouring paints, lacquers and/or plastics.
